# EUROPEAN PATENT SPECIFICATION

(11) **EP 3 063 883 B1**
(45) Date of publication and mention of the grant of the patent: **27.06.2018**
(21) Application number: 14858860.1
(22) Date of filing: 28.10.2014
(51) Int. Cl.: H04W 36/00, H04L 5/00, H04W 56/00, H04W 76/15, H04W 28/08

(54) **USER EQUIPMENT AND EVOLVED NODE-B AND METHODS FOR OPERATION IN A COVERAGE ENHANCEMENT MODE**
BENUTZERVORRICHTUNG UND E-NODE-B SOWIE VERFAHREN ZUM BETRIEB IN EINEM REICHWEITENVERSTÄRKUNGSMODUS
ÉQUIPEMENT D'UTILISATEUR ET NOEUD-B ÉVOLUÉ ET PROCÉDÉS DE FONCTIONNEMENT DANS UN MODE D'AMÉLIORATION DE COUVERTURE

(30) Priority: 31.10.2013 US 201361898425 P
(43) Date of publication of application: 07.09.2016
(73) Proprietor: Intel IP Corporation, Santa Clara, CA 95054 (US)
(72) Inventor: XIONG, Gang, Beaverton, Oregon 97006 (US); HAN, Seunghee, Santa Clara, CA 95054 (US); HEO, Youn Hyoung, Santa Clara, CA 95054 (US)
(74) Representative: Goddar, Heinz J.
(86) International application number: PCT/US2014/062533
(87) International publication number: WO 2015/065947

(56) References cited:
- US-A1- 2011 280 212
- INTEL CORPORATION: "Discussion on PRACH Coverage Enhancement for Low Cost MTC", 3GPP DRAFT; R1-132930 - DISCUSSION ON PRACH COVERAGE ENHANCEMENT FOR LOW COST MTC, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG1, no. Barcelona, Spain; 20130819 - 20130823 10 August 2013 (2013-08-10), XP050716170, Retrieved from the Internet: URL:http://www.3gpp.org/ftp/tsg_ran/WG1_RL 1/TSGR1_74/Docs/ [retrieved on 2013-08-10]
- HUAWEI ET AL: "Discussion on PRACH coverage improvement and mechanism for determining the amount of needed coverage improvement", 3GPP DRAFT; R1-134054, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717246, Retrieved from the Internet: URL:http://www.3gpp.org/ftp/tsg_ran/WG1_RL 1/TSGR1_74b/Docs/ [retrieved on 2013-09-28]
- INTEL CORPORATION: "Coverage enhancement of PRACH for low cost MTC", 3GPP DRAFT; R1-135104 INTEL MTC PRACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 2 November 2013 (2013-11-02), XP050750738, Retrieved from the Internet: URL:http://www.3gpp.org/ftp/tsg_ran/WG1_RL 1/TSGR1_75/Docs/ [retrieved on 2013-11-02]
- INTEL CORPORATION: "Coverage Improvement for PRACH", 3GPP DRAFT; R1-140115 - INTEL MTC PRACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 1 February 2014 (2014-02-01), XP050751794, Retrieved from the Internet: URL:http://www.3gpp.org/ftp/tsg_ran/WG1_RL 1/TSGR1_76/Docs/ [retrieved on 2014-02-01]
- ZTE: 'Physical Random Access Channel Coverage Enhancement' , 3GPP TSG RAN WG1 MEETING #74BIS,RL-134303 28 September 2013, GUANGZHOU, CHINA, XP050717447
- INTEL CORPORATION: 'PRACH coverage enhancement for low cost MTC' , 3GPP TSG RAN WG1 MEETING #74BIS,R1-134130 28 September 2013, GUANGZHOU, CHINA, XP050717320
- NTT DOCOMO: 'Discussion on Multi-level PRACH Coverage Enhancement' , 3GPP TSG RAN WG1 MEETING #74BIS,R1-134493 28 September 2013, GUANGZHOU, CHINA, XP050717595
- LG ELECTRONICS: 'RACH procedure for coverage enhancement of MTC UEs' , 3GPP TSG RAN VG1 MEETING #74BIS,RL-134393 28 September 2013, GUANGZHOU, CHINA, XP050717518

## Description

### PRIORITY CLAIM

This application claims priority to United States Provisional Patent Application Serial No. 61/898,425, filed October 31, 2013.

### TECHNICAL FIELD

Embodiments pertain to wireless communications. Some embodiments relate to wireless networks including LTE networks. Some embodiments relate to operation in a coverage enhancement mode. Some embodiments relate to Machine Type Communication (MTC).

### BACKGROUND

A mobile device operating in a cellular network may experience performance degradation in some cases, which may affect the ability of the device to connect or reconnect to the network. As an example, the mobile device may lose coverage as it moves toward or beyond the edge of a cell or sector of the network. As another example, a mobile device may be expected to operate in an environment with low link quality. Devices that support Machine Type Communication (MTC), for instance, may exchange small quantities of data at an infrequent rate in such low link conditions.

In any case, connection or reconnection to the network may be challenging in these and other scenarios. Accordingly, methods and techniques for connection or reconnection to the network are needed. The 3GPP draft R1-132930 (INTEL CORPORATION: "Discussion on PRACH Coverage Enhancement for Low Cost MTC") provides information on PRACH coverage enhancement and indication of coverage extension levels by utilizing PRACH transmission. It also provides an analysis on potential solutions and present link level simulation results for PRACH coverage enhancement for low cost MTC in LTE systems.

### BRIEF DESCRIPTION OF THE DRAWINGS

FIG. 1 is a functional diagram of a 3GPP network in accordance with some embodiments;
FIG. 2 is a block diagram of a User Equipment (UE) in accordance with some embodiments;
FIG. 3 is a block diagram of an Evolved Node-B (eNB) in accordance with some embodiments;
FIG. 4 is an example of a scenario in which UEs operating in a network may experience reduced coverage from an eNB in accordance with some embodiments;
FIG. 5 illustrates the operation of a method of communicating on a random access channel (RACH) in accordance with some embodiments;
FIG. 6 illustrates the operation of another method of communicating on a RACH in accordance with some embodiments;
FIG. 7 illustrates examples of MAC random access responses (RARs) in accordance with some embodiments;
FIG. 8 illustrates a method for connection or reconnection in accordance with some embodiments; and
FIG. 9 illustrates an example of a table of repetition levels in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

The invention is defined by the independent claims.

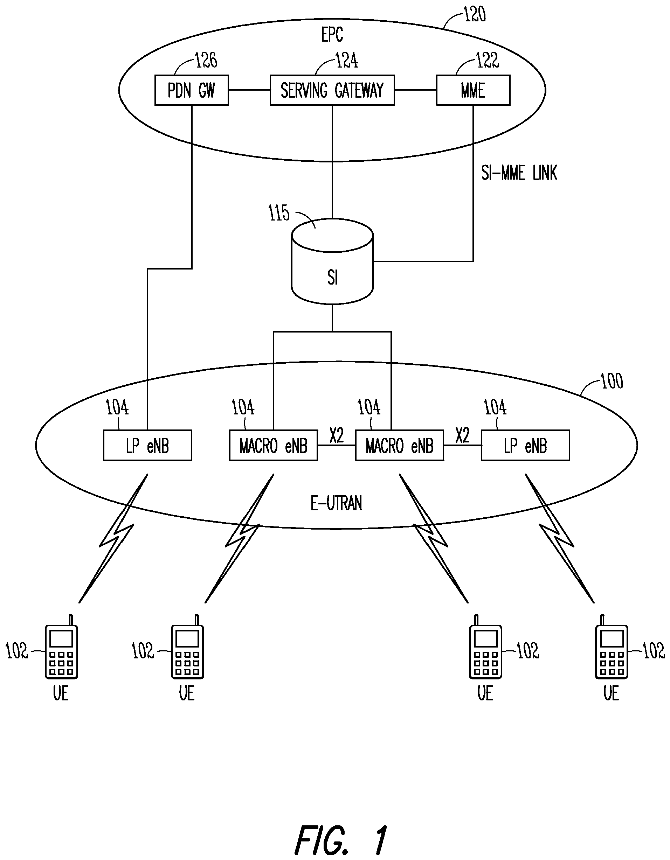

FIG. 1 shows a portion of an end-to-end network architecture of an LTE network with various components of the network in accordance with some embodiments. The network 100 comprises a radio access network (RAN) (e.g., as depicted, the E-UTRAN or evolved universal terrestrial radio access network) 100 and the core network 120 (e.g., shown as an evolved packet core (EPC)) coupled together through an S1 interface 115. For convenience and brevity sake, only a portion of the core network 120, as well as the RAN 100, is shown.

The core network 120 includes mobility management entity (MME) 122, serving gateway (serving GW) 124, and packet data network gateway (PDN GW) 126. The RAN 100 includes Evolved Node-B's (eNBs) 104 (which may operate as base stations) for communicating with User Equipment (UE) 102. The eNBs 104 may include macro eNBs and low power (LP) eNBs.

The MME is similar in function to the control plane of legacy Serving GPRS Support Nodes (SGSN). The MME manages mobility aspects in access such as gateway selection and tracking area list management. The serving GW 124 terminates the interface toward the RAN 100, and routes data packets between the RAN 100 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro and micro) terminate the air interface protocol and may be the first point of contact for a UE 102. In some embodiments, an eNB 104 may fulfill various logical functions for the RAN 100 including but not limited to RNC (radio network controller functions) such as radio bearer management, uplink and downlink dynamic radio resource management and data packet scheduling, and mobility management. In accordance with embodiments, UEs 102 may be configured to communicate OFDM communication signals with an eNB 104 over a multicarrier communication channel in accordance with an OFDMA communication technique. The OFDM signals may comprise a plurality of orthogonal subcarriers.

In accordance with some embodiments, a UE 102 may transmit, for reception at an eNB 104, a physical random access channel (PRACH) preamble according to an uplink access repetition number. The UE 102 may also receive, from the eNB 104, a random access response (RAR) message according to a downlink repetition number. These embodiments are described in more detail below.

The S1 interface 115 is the interface that separates the RAN 100 and the EPC 120. It is split into two parts: the S1-U, which carries traffic data between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller, and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

In some embodiments, a downlink resource grid may be used for downlink transmissions from an eNB 104 to a UE 102, while uplink transmission from the UE 102 to the eNB 104 may utilize similar techniques. The grid may be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements and in the frequency domain, this represents the smallest quanta of resources that currently can be allocated. There are several different physical downlink channels that are conveyed using such resource blocks. With particular relevance to this disclosure, two of these physical downlink channels are the physical downlink shared channel and the physical down link control channel.

The physical downlink shared channel (PDSCH) carries user data and higher-layer signaling to a UE 102 (FIG. 1). The physical downlink control channel (PDCCH) carries information about the transport format and resource allocations related to the PDSCH channel, among other things. It also informs the UE 102 about the transport format, resource allocation, and H-ARQ information related to the uplink shared channel. Typically, downlink scheduling (assigning control and shared channel resource blocks to UEs 102 within a cell) is performed at the eNB 104 based on channel quality information fed back from the UEs 102 to the eNB 104, and then the downlink resource assignment information is sent to a UE 102 on the control channel (PDCCH) used for (assigned to) the UE 102.

The PDCCH uses CCEs (control channel elements) to convey the control information. Before being mapped to resource elements, the PDCCH complex-valued symbols are first organized into quadruplets, which are then permuted using a sub-block inter-leaver for rate matching. Each PDCCH is transmitted using one or more of these control channel elements (CCEs), where each CCE corresponds to nine sets of four physical resource elements known as resource element groups (REGs). Four QPSK symbols are mapped to each REG. The PDCCH can be transmitted using one or more CCEs, depending on the size of DCI and the channel condition. There may be four or more different PDCCH formats defined in LTE with different numbers of CCEs (e.g., aggregation level, L=1, 2, 4, or 8).

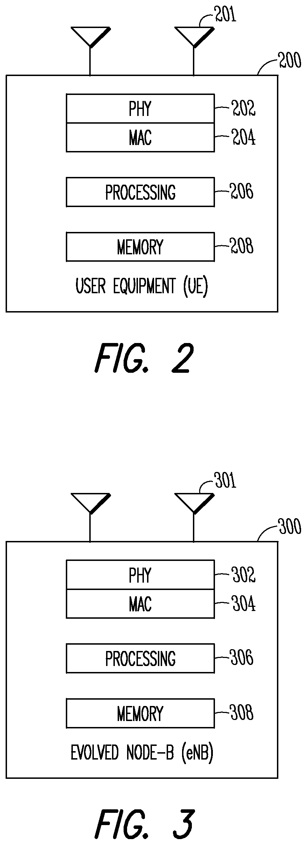

FIG. 2 shows a block diagram of a UE 200 in accordance with some embodiments, while FIG. 3 shows a block diagram of an eNB 300 in accordance with some embodiments. It should be noted that in some embodiments, the eNB 300 may be a stationary non-mobile device. The UE 200 may be a UE 102 as depicted in FIG. 1, while the eNB 300 may be an eNB 104 as depicted in FIG. 1. The UE 200 may include physical layer circuitry 202 for transmitting and receiving signals to and from the eNB 300, other eNBs, other UEs or other devices using one or more antennas 201, while the eNB 300 may include physical layer circuitry 302 for transmitting and receiving signals to and from the UE 200, other eNBs, other UEs or other devices using one or more antennas 301. The UE 200 may also include medium access control layer (MAC) circuitry 204 for controlling access to the wireless medium, while the eNB 300 may also include medium access control layer (MAC) circuitry 304 for controlling access to the wireless medium. The UE 200 may also include processing circuitry 206 and memory 208 arranged to perform the operations described herein, and the eNB 300 may also include processing circuitry 306 and memory 308 arranged to perform the operations described herein.

In some embodiments, mobile devices or other devices described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the mobile device or other device can be the UE 200 or the eNB 300 configured to operate in accordance with 3GPP standards. In some embodiments, the mobile device or other device may be configured to operate according to other protocols or standards, including IEEE 802.11 or other IEEE standards. In some embodiments, the mobile device or other device may include one or more of a keyboard, a display, a non-volatile memory port, multiple antennas, a graphics processor, an application processor, speakers, and other mobile device elements. The display may be an LCD screen including a touch screen.

The antennas 201, 301 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 201, 301 may be effectively separated to take advantage of spatial diversity and the different channel characteristics that may result.

Although the UE 200 and eNB 300 are each illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

In accordance with embodiments, the UE 102 may determine a coverage enhancement (CE) category for the UE 102 based at least partly on downlink channel statistics related to reception of one or more downlink signals from the eNB 104. The CE category may reflect one of a level of additional link margin and a level of system resources for performance at or above a performance threshold. The UE 102 may also transmit, in physical random access channel (PRACH) frequency resources, a PRACH preamble according to an uplink access repetition number. The PRACH frequency resources and the uplink access repetition number may be based at least partly on the CE category for the UE 102. These embodiments are described in more detail below.

In some scenarios, the UE 102 operating in a cellular communication network (such as 100) may lose connectivity to the network or may have difficulty in remaining connected to the network for various reasons. As an example, the UE 102 may move toward an area with reduced coverage, such as the edge of a sector or cell. As another example, the UE 102 may operate in an area that is essentially out of the normal coverage of the network, such as in a basement of a building. As another example, the UE 102 or other device may support Machine Type Communication (MTC). MTC devices or devices operating in an MTC mode may be expected to operate in highly challenging link budget scenarios while exchanging small quantities of data at an infrequent rate.

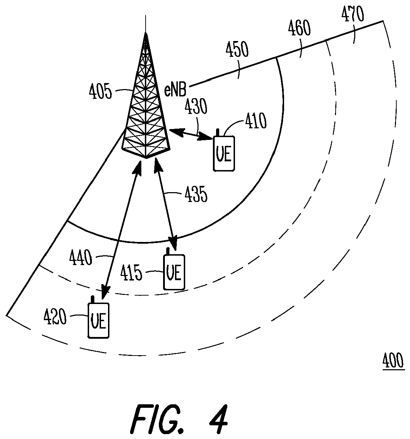

Referring to FIG. 4, an example of a connection scenario 400 is shown, in which a tower eNB 405 (which can be the eNB 104) and three UEs 410, 415, 420 (which can be the UE 102) located at various distances from the eNB 405 are operating, or attempting to operate, as part of a 3GPP or other network. It should be noted that the eNB 405 is not limited to the tower configuration and that scenarios described herein are not limited to the number or distribution of eNBs 405 or UEs 410, 415, 420 as shown in FIG. 4. The first UE 410 is in communication with the eNB 405 over the link 430, and is comfortably located within the coverage area 450 of the eNB 405. As such, it is expected that the first UE 410 may not be involved in a reconnection procedure. The second UE 415 is located outside of the coverage area 450 in a demarcated zone 460, and may be attempting a reconnection procedure over the link 435 (note the link may not actually be established or stable yet). Similarly, the third UE 420 is also located outside of the coverage area 450 in another demarcated zone 470 that is further away from the eNB 405 than the first demarcated zone 460. The third UE 420 may also be attempting a reconnection procedure over the link 440 (which may not actually be established or stable yet).

The second UE 415 and third UE 420 may be described as needing "coverage enhancement," or operating in "coverage enhancement mode," as they are out of the coverage area 450. Additionally, while both UEs 415, 420 are outside of the coverage area 450, the third UE 420 may have more trouble or challenges in reconnecting than would the second UE 415, as the third UE 420 is further away from the eNB 405. Accordingly, it may be possible to formulate different categories of coverage enhancement for UEs depending on how far out of coverage they are located or other factors. In some embodiments, descriptions may be used in the categories. For instance, the third UE 420 may be considered in a "high" category of coverage enhancement mode while the second UE 415 may be considered in a "low" category of coverage enhancement mode. In some embodiments, the categories may be numerical, such as 5 dB, 10 dB, and 15 dB, which may represent an additional amount of link budget that may be added to the UEs 415, 420 in order to realize a "normal operation." The normal operation may be characterized by any suitable criteria such as a target packet error rate, acquisition time, data throughput or the like.

It should be pointed out that the above discussion focuses on path loss due to distance only, for purposes of illustration, but this is not limiting. It is known in the art that path loss, signal loss, coverage holes or the like may result from effects other than distance, such as obstacles or indoor location. For instance, a device located in a basement of a building close to the eNB 405 may actually be in need of a coverage enhancement while another device located much further away, but outdoors, may have a stronger connection to the eNB 405 and may be in need of less or no coverage enhancement.

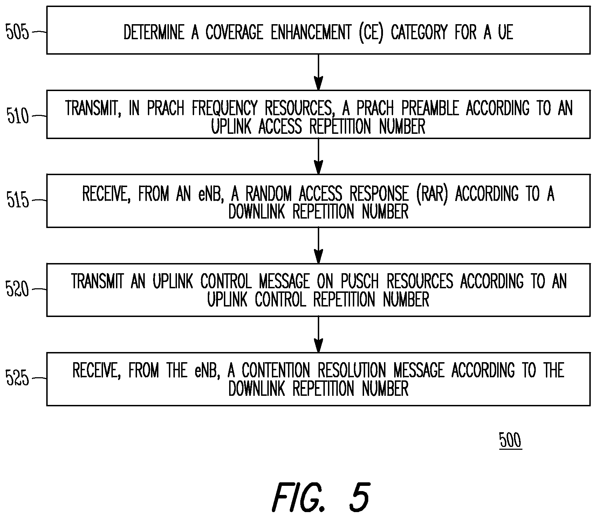

Referring to FIG. 5, a method 500 of operating in accordance with a coverage enhancement mode is shown. It is important to note that embodiments of the method 500 may include additional or even fewer operations or processes in comparison to what is illustrated in FIG. 5. In addition, embodiments of the method 500 are not necessarily limited to the chronological order that is shown in FIG. 5. In describing the method 500, reference may be made to FIGs. 1-4 and 6-9, although it is understood that the method 500 may be practiced with any other suitable systems, interfaces and components. For example, reference may be made to the scenario 400 in FIG. 4 described earlier for illustrative purposes, but the techniques and operations of the method 500 are not so limited.

In addition, while the method 500 and other methods described herein may refer to eNBs 104 or UEs 102 operating in accordance with 3GPP or other standards, embodiments of those methods are not limited to just those eNBs 104 or UEs 102 and may also be practiced on other mobile devices, such as a Wi-Fi access point (AP) or user station (STA). Moreover, the method 500 and other methods described herein may be practiced by wireless devices configured to operate in other suitable types of wireless communication systems, including systems configured to operate according to various IEEE standards such as IEEE 802.11. In addition the method 500 and other methods described herein may be practiced by UEs or other devices that support or are configured to support Machine Type Communication (MTC) operation.

At operation 505 of the method 500, a coverage enhancement (CE) category may be determined for the UE 102. The CE category for the UE 102 may reflect one of a level of additional link margin and a level of system resources for performance at or above a performance threshold associated with a normal operating mode for the UE 102. In some embodiments, the CE category may be determined from a group of candidate CE categories. As an example, the candidate CE categories may include 5, 10 or 15 dB, which may refer to a link budget addition that may enable a level of performance for the UE 102 in terms of error rate, throughput or other performance measure. An additional CE category may include "no CE" or similar, which may reflect that the UE 102 is not operating in a CE mode. In addition, previously described examples related to CE categories may also be used, such as "high" and "low."

The determination of the CE category may be based at least partly on downlink channel statistics related to reception of one or more downlink signals at the UE from an Evolved Node-B (eNB). In some embodiments, the downlink channel statistics may include reference signal received power (RSRP) or other path loss measurements at the UE. As an example, a determined path loss at the UE 102 may be compared with a predetermined link budget path loss to determine the CE category for the UE 102. The predetermined link budget path loss may indicate a maximum path loss for "normal" operation in terms of packet error rate or other measure. The statistics may be based on or collected over any suitable time period, which may be on the order of symbol periods, sub-frames, seconds, minutes or longer. The measurements may include averages, moving averages, weighted averages or other suitable statistics, and may refer to scalar or logarithmic (dB) quantities.

At operation 510, a PRACH preamble may be transmitted in PRACH frequency resources according to an uplink access repetition number. The PRACH frequency resources may be based at least partly on the CE category for the UE 102. In some embodiments, the group of candidate CE categories may include a first and a second candidate CE category for which PRACH frequency resources for the first CE category are exclusive to PRACH frequency resources for the second CE category. In addition, the group of candidate CE categories may include more than the first and second candidate CE categories, and some or all of the candidate CE categories may be associated with different PRACH frequency resources that may be exclusive to each other. Accordingly, the frequency resources used for the transmission of the PRACH preamble may indicate or reflect the determined CE category for the UE 102. Mappings or assignments of PRACH frequency resources to candidate CE categories may be predetermined, may be part of 3GPP or other standards or may be determined by the network. In addition, the PRACH frequency resources used by the UE 102 when operating in the CE mode may be disjoint from PRACH frequency resources used by UEs not operating in the CE mode.

In some embodiments, a random access radio network temporary identifier (RA-RNTI) computed for the PRACH preamble transmission may depend on whether or not the UE 102 is in the CE mode. As an example, the RA-RNTI may be computed as (1 + t_id + 10*f_id + c*MTC_id), in which t_id is the index of the first sub-frame of the specified PRACH preamble, f_id is the index of the specified PRACH preamble within that sub-frame, the value of "c" may be 60, and the MTC_id is 0 or 1 when the UE 102 is not, or is, in the CE mode.

The uplink access repetition number may be based at least partly on the CE category for the UE 102. In some embodiments, the group of candidate CE categories may include a first and a second candidate CE category for which an uplink access repetition number for the first CE category is different from an uplink access repetition number for the second CE category. The uplink access repetition number may refer to a number of repetitions of the PRACH preamble to be transmitted by the UE 102. In addition, the group of candidate CE categories may include more than the first and second candidate CE categories, and some or all of the candidate CE categories may be associated with uplink access repetition numbers that may be different. In some embodiments, an uplink access repetition number (or other repetition numbers or levels described herein) for a CE category considered "high" may be larger than an uplink access repetition number for a CE category considered "low." For instance, the UE 102 may repeat the PRACH preamble 100 times when operating in the CE category of 15 dB and may repeat the PRACH preamble only 20 times when operating in the CE category of 5 dB. Accordingly, the larger number of repetitions may provide additional diversity or energy gain for the UE 102 when it operates in a higher CE category. The number of repetitions for the candidate CE categories may be pre-determined through simulation or analysis or other techniques. In some embodiments, the repetitions of the PRACH preamble may be transmitted during different time periods.

At operation 515 of the method 500, a Random Access Response (RAR) may be received from the eNB 104 according to a downlink repetition number. As previously described, the PRACH frequency resources used by the UE 102 may indicate the determined CE category for the UE 102, which may be ascertained by the eNB 104 using knowledge of the previously described mappings and assignments between PRACH frequency resources and CE categories. The downlink repetition number may refer to a number of repetitions of the RAR to be transmitted by the eNB 104, and the number of repetitions for some or all of the candidate CE categories may be different. Accordingly, the downlink repetition number may be based at least partly on the CE category for the UE 102, and may be pre-determined through simulation or analysis or other techniques.

In some embodiments, the downlink repetition number may be included in a PDCCH. A new downlink control information (DCI) format, or an existing DCI format such as "1A" or other in 3GPP standards, may include the downlink repetition number or an indicator of it. As an example, the downlink repetition number may include a bit field of two bits corresponding to "no repetition" and repetition levels of 0, 1, and 2, in which the number of repetitions associated with each repetition level may be pre-defined or signaled in other messages. As another example, the downlink repetition number may be a single bit corresponding to "no repetition" or repetition according to a pre-defined or previously signaled repetition number. As another example, the downlink repetition number may be a bit field that explicitly states a number of repetitions to be used. Embodiments are not limited to the number of bits or levels described in the above examples, however, as the downlink repetition number may describe or specify the amount of repetition in any suitable manner. In some embodiments, the downlink repetition number may refer to a "PDSCH repetition level" as will be described later.

In some embodiments, the RAR may be received on PDSCH frequency resources that are based at least partly on the CE category for the UE 102. In addition, the PDSCH frequency resources for the RAR may be disjoint from PDSCH frequency resources used for RARs or other messages for UEs not operating in the CE mode. In some embodiments, a pre-defined frequency allocation for the PDSCH may be determined. Accordingly, the PDCCH may not need to be decoded at the UE 102, which may be beneficial due to the fact that a large number of repetitions of the PDCCH may have to be used when the UE 102 operates in the CE mode. That is, the UE 102 may refrain from decoding the PDCCH as part of the reception of the RAR. Such an arrangement may be considered "PDCCH-less" operation.

In some embodiments, dedicated PDSCH frequency resources may be pre-defined and configured appropriately for coverage-limited MTC UEs. In addition, knowledge of a fixed timing relationship between PRACH transmission and RAR reception may be used at the UE 102. Knowledge of a transport format for PDSCH transmission may also be used at the UE 102. In some embodiments, a control message, such as an SIB-2 or other System Information Block (SIB) message, may include information such as the timing relationship or transport format just described. The control message may be transmitted to the UE 102 by the eNB 104, either as a dedicated or broadcast message. In addition, information such as the timing relationship or transport format just described may also be pre-defined in some embodiments.

At operation 520, an uplink control message may be transmitted on PUSCH resources according to an uplink control repetition number. The transmission may be in response to the reception of the RAR at the UE 102. In some embodiments, the uplink control message may be an "L2/L3" message or may include or be included in one or more L2/L3 messages.

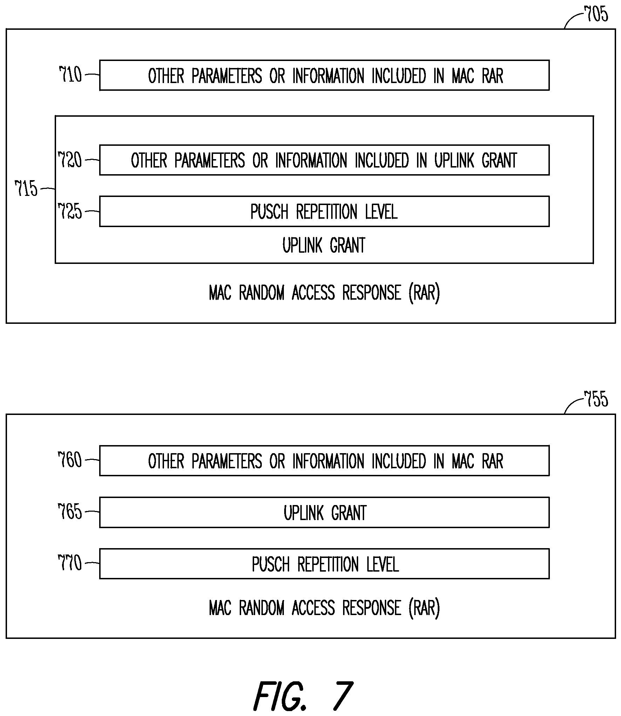

The uplink control repetition number may refer to a number of repetitions of the uplink control message to be transmitted by the UE 102, and the number of repetitions for some or all of the candidate CE categories may be different. In some embodiments, the uplink control repetition number may be based at least partly on the CE category for the UE 102, and may be pre-determined through simulation or analysis or other techniques. In some embodiments, the uplink control repetition number may be included in the RAR message received at the UE 102 at operation 515. In some embodiments, the uplink control repetition number may be included in RAR content of the RAR message or may be included in an uplink grant included in the RAR message, as will be described in more detail regarding the method 600 and FIG. 7. In addition, the uplink control repetition number may be a "PUSCH repetition level" that refers to a repetition number to be used for PUSCH transmission.

The uplink control message may be transmitted on PUSCH frequency resources that are based at least partly on the CE category for the UE 102. In addition, the PUSCH frequency resources for the uplink control message may be disjoint from PUSCH frequency resources used for uplink control or other messages for UEs not operating in the CE mode.

In some embodiments, the uplink control message may include a second CE category for the UE 102, which may be determined at the UE 102 based at least partly on the reception of the RAR at operation 515. For instance, based on a signal quality, signal level or other measurement for the reception of the RAR, the UE 102 may select a second CE category for the UE 102. The second category may be selected from a second group of candidate CE categories that may or may not be different from the group of candidate CE categories used in other operations such as 505-520. For instance, the second group of candidate CE categories may cover a larger range or provide finer granularity. Accordingly, the second CE category may be a new or refined value that may provide more information to the eNB 104 about coverage enhancement for the UE 102.

At operation 525, a contention resolution message may be received from the eNB according to the downlink repetition number. In some embodiments, the downlink repetition numbers for operations 515 and 525 may be the same. However, this arrangement is not limiting, and the two numbers may be different in some embodiments. As previously described, the downlink repetition number used at operation 525 may refer to a number of repetitions of the contention resolution message transmitted by the eNB 104, and the number of repetitions for some or all of the candidate CE categories may be different. In some embodiments, the downlink repetition number used at operation 525 may be based at least partly on the CE category for the UE 102, and may be pre-determined through simulation or analysis or other techniques.

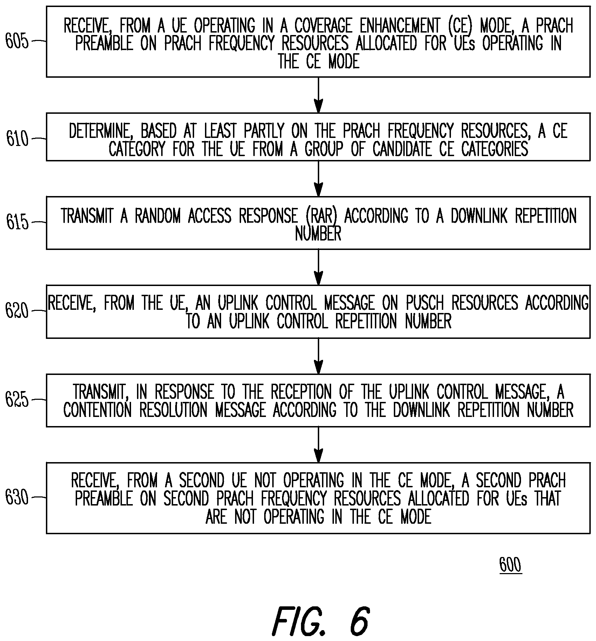

Referring to FIG. 6, a method 600 of operating in a coverage enhancement mode is shown. As mentioned previously regarding the method 500, embodiments of the method 600 may include additional or even fewer operations or processes in comparison to what is illustrated in FIG. 6 and embodiments of the method 600 are not necessarily limited to the chronological order that is shown in FIG. 6. In describing the method 600, reference may be made to FIGs. 1-5 and 7-9, although it is understood that the method 600 may be practiced with any other suitable systems, interfaces and components. For example, reference may be made to the scenario 400 in FIG. 4 described earlier for illustrative purposes, but the techniques and operations of the method 600 are not so limited. In addition, embodiments of the method 600 may refer to eNBs 104, UEs 102, APs, STAs or other wireless or mobile devices.

It should be noted that the method 600 may be practiced at the eNB 104, and may include exchanging of signals or messages with the UE 102. Similarly, the method 500 may be practiced at the UE 102, and may include exchanging of signals or messages with the eNB 104. In some cases, operations and techniques described as part of the method 500 may be relevant to the method 600. For instance, an operation of the method 500 may include transmission of a message by the UE 102 while an operation of the method 600 may include reception of the same message at the eNB 104.

At operation 605 of the method 600, a PRACH preamble may be received at the eNB 104 from the UE 102 operating in a coverage enhancement (CE) mode on PRACH frequency resources. The PRACH preamble may be received according to an uplink access repetition number, which may refer to a number of repetitions of the PRACH preamble transmitted by the UE 102. In some embodiments, uplink access repetition numbers may be based at least partly on a CE category for the UE, which may be selected from a group of candidate CE categories, as previously described. The uplink access repetition numbers for the CE categories may be different and may also be known at the eNB 104 for use in the reception of the PRACH at operation 605.

At operation 610, a CE category may be determined for the UE 102 from a group of candidate CE categories, and the determination may be based at least partly on the PRACH frequency resources used for the PRACH preamble. As previously described, some or all of the candidate CE categories may be associated with different PRACH frequency resources that may be exclusive to each other. Mappings or assignments of PRACH frequency resources to candidate CE categories may be known at the eNB 104. Accordingly, the eNB 104 may determine the CE category for the UE 102 based on which PRACH frequency resources are used. In some embodiments, the PRACH frequency resources used by the UE 102 when operating in the CE mode may be disjoint from PRACH frequency resources used by UEs not operating in the CE mode.

At operation 615, a Random Access Response (RAR) may be transmitted according to a downlink repetition number, which may be based at least partly on the CE category for the UE 102. In some embodiments, PDSCH frequency resources that are based at least partly on the CE category for the UE 102 may be used for transmission of the RAR, and the PDSCH frequency resources may be disjoint from second PDSCH frequency resources for UEs not operating in a CE mode. In some embodiments, the RAR message may be transmitted in response to the reception of the PRACH preamble at operation 605.

A physical downlink control channel (PDCCH) data block that includes PDSCH resource allocations for UEs not operating in the CE mode may be transmitted. In addition, the eNB 104 may refrain from transmission of PDCCH data blocks for UEs operating in the CE mode. Accordingly, UEs operating in the CE mode may receive the RAR on pre-determined PDSCH frequency resources. Such an arrangement may be considered "PDCCH-less" operation, as the UEs operating in the CE mode may receive the RAR (or other messages) on PDSCH resources without decoding a PDCCH data block.

In addition, a control message may also be transmitted by the eNB 104 for reception at the UE 102 that may include an allocation for the PDSCH frequency resources. The control message may also include other information, such as a modulation and coding scheme (MCS) indicator for the RAR transmission. The MCS indicator may be an index that refers to an MCS of a group of pre-determined candidate MCSs, and each candidate MCS may refer to a modulation type (such as BPSK, QPSK, QAM or other) and a forward error correction (FEC) coding rate. A timing relationship between PRACH transmission at the UE 102 and the RAR transmission may also be included in the control message. In some embodiments, the timing relationship may be fixed. In some embodiments, the control message may be an SIB-2 or other System Information Block (SIB) message of 3GPP or other standards.

At operation 620, an uplink control message may be received from the UE 102 on PUSCH resources according to an uplink control repetition number. In some embodiments, the uplink control repetition number may be based at least partly on the CE category for the UE 102, and may also be predetermined. In some embodiments, the RAR transmitted at operation 615 (or another message from the eNB 104) may include the uplink control repetition number for the UE 102 to use. The value transmitted in the RAR may override or replace, in some cases, a predetermined value for the uplink control repetition number that the UE may otherwise use, such as a value based on the CE category as described above.

PUSCH frequency resources that are at least partly based on the CE category for the UE 102 may be used for reception of the uplink control message at the eNB 104, and the PUSCH frequency resources may be disjoint from second PUSCH frequency resources for UEs not operating in a CE mode.

At operation 625, a contention resolution message may be transmitted according to the downlink repetition number. As previously described, the downlink repetition number may be based at least partly on the CE category for the UE 102. In addition, the downlink repetition number used at operation 625 may be the same as the downlink repetition number used at operation 615, but is not limited as such. In some embodiments, PDSCH frequency resources that are at least partly based on the CE category for the UE 102 may be used for transmission of the contention resolution message. The PDSCH frequency resources may or may not overlap the PDSCH frequency resources used at operation 615 for transmission of the RAR.

At operation 630 of the method 600, a second PRACH preamble may be received from a second UE not operating in the CE mode. The second PRACH preamble may be received on second PRACH frequency resources allocated for UEs that are not operating in the CE mode. In some embodiments, the second PRACH frequency resources may be exclusive to the PRACH frequency resources allocated for UEs operating in the CE mode. It should also be pointed out that UEs not operating in the CE mode may include legacy UEs that do not support coverage enhancement.

Referring to FIG. 7, examples of RAR messages, or MAC RAR messages, are shown in accordance with some embodiments. The RAR message 705 may include other parameters or information 710 that may or may not be related to coverage enhancement or connection or reconnection operations. The RAR message 705 may also include an uplink grant 715, which may include a PUSCH repetition level 725 and other parameters or information 720 that may or may not be related to coverage enhancement or connection or reconnection operations. As will be explained below, the PUSCH repetition level 725 may be the same as or may play the same role as the uplink control repetition level previously described in relation to methods 500 and 600.

Another example RAR 755 may include other parameters or information 760 that may or may not be related to coverage enhancement or connection or reconnection operations. The RAR 755 may also include an uplink grant 765 and a PUSCH repetition level 770. Accordingly, the PUSCH repetition level 770 may be external to the uplink grant 765, in contrast to the PUSCH repetition level 725 which may be included in the uplink grant 715.

In some embodiments, the PUSCH repetition level 725 may be included as part of the RAR 705 transmitted by the eNB 104 at operation 615, or may be included as part of the RAR 705 received at the UE 102 at operation 515. In some embodiments, the PUSCH repetition level 770 may be included as part of the RAR 755 transmitted by the eNB 104 at operation 615, or may be included as part of the RAR 755 received at the UE 102 at operation 515. It should be pointed out that the RARs 705, 755 serve to illustrate the concept of an RAR, but are not limiting, and other suitable arrangements for the RAR may be used.

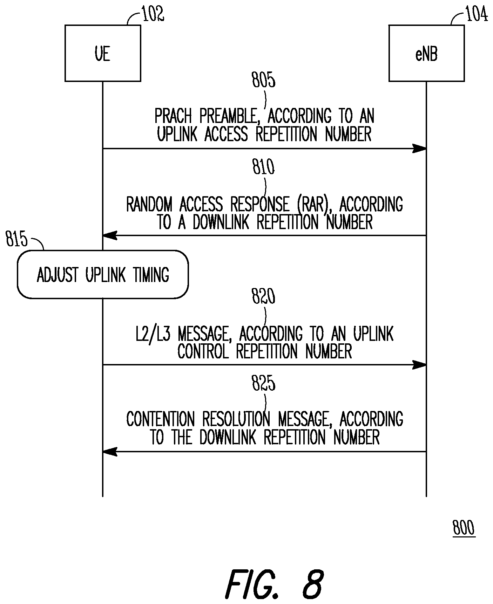

Referring to FIG. 8, a signal flow diagram illustrates an example of a method 800 for connection or reconnection between the UE 102 and the eNB 104. It should be noted that some of the operations of the method 800 may be similar to operations included in the methods 500 or 600. In such cases, descriptions of such operations in the methods 500 or 600 may be applicable to corresponding operations included in the method 800. In addition, the method 800 shown in FIG. 8 may serve to illustrate the concept of a connection or reconnection procedure, but it is not limiting. Fewer or additional operations may be included in other embodiments of connection or reconnection methods, and the chronological order of operations is not limited to that shown in FIG. 8.

At operation 805, a PRACH preamble may be transmitted from the UE 102 to the eNB 104 according to an uplink access repetition number. At operation 810, the eNB 104 may transmit a random access response (RAR) to the UE 102 according to a downlink repetition number. At operation 815, the UE 102 may adjust its uplink timing. It should be noted that the UE 102 may perform operations 805 without timing synchronization with the eNB 104, and may acquire or refine its timing during the reception of the RAR at operation 810. At operation 820, the UE 102 may transmit an uplink control message (such as an L2/L3 message) to the eNB 104 according to an uplink control repetition number. At operation 825, the eNB 104 may transmit a contention resolution message to the UE 102 according to the same downlink repetition number used at operation 810.

As previously described, repetition numbers may quantify how many repetitions of a message, such as the PRACH preamble or RAR, may be transmitted, and may depend on the CE category of the UE 102. For instance, the uplink access repetition number may refer to a number of repetitions of the PRACH preamble. For a connection or reconnection procedure, messages exchanged between the UE 102 and eNB 104 may be repeated according to predetermined values, which may be determined through simulation or analysis. In some embodiments, a table may include repetition values for different CE categories, and may be used in operations described previously.

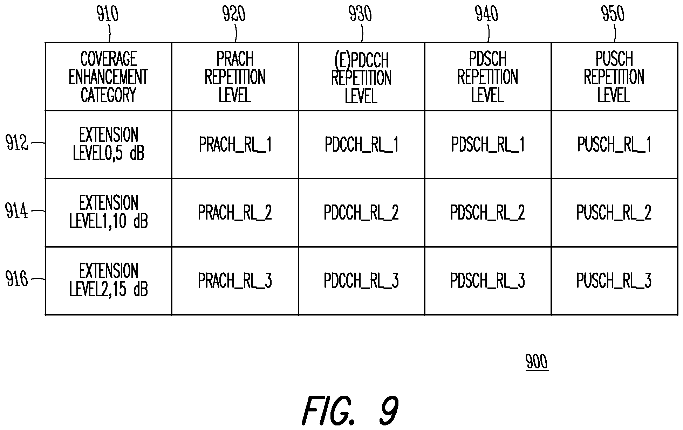

An example of such a table 900 is shown in FIG. 9. The column 910 includes three CE categories 912, 914, 916, which correspond to 5, 10, and 15 dB in this example. The row associated with each of the three CE categories 912, 914, 916 may include repetition values for use when the UE 102 operates in that particular CE category. The values for the columns 920, 930, 940, 950 may correspond to PRACH repetition level 920, (E)PDCCH repetition level 930, PDSCH repetition level 940, and PUSCH repetition level 950. These labels on columns 920, 930, 940, 950 may be the same as or related to repetition values previously described. As an example, the PRACH repetition level 920 may be the same as or related to the uplink access repetition number. As another example, the PDCCH repetition level 930 or the PDSCH repetition level 940 may be the same as or related to the downlink repetition number. As another example, the PUSCH repetition level 950 may be the same as or related to the uplink control repetition number.

A User Equipment (UE) to operate in accordance with a coverage enhancement (CE) mode is disclosed herein. The UE may include hardware processing circuitry configured to determine, from a group of candidate CE categories, a CE category for the UE based at least partly on downlink channel statistics related to reception of one or more downlink signals at the UE from an Evolved Node-B (eNB). The hardware processing circuitry may be further configured to transmit, in physical random access channel (PRACH) frequency resources, a PRACH preamble according to an uplink access repetition number. In some embodiments, the PRACH frequency resources and the uplink access repetition number may be based at least partly on the CE category for the UE. In some embodiments, the CE category for the UE may reflect one of a level of additional link margin and a level of system resources for performance at or above a performance threshold associated with a normal operating mode for the UE. In some embodiments, the downlink channel statistics may include reference signal received power (RSRP) or path loss measurements at the UE.

In some embodiments, the group of candidate CE categories may include a first and a second candidate CE category for which an uplink access repetition number for the first CE category is different from an uplink access repetition number for the second CE category. In some embodiments, the group of candidate CE categories may include a first and a second candidate CE category for which PRACH frequency resources for the first CE category are exclusive to PRACH frequency resources for the second CE category.

The hardware processing circuitry may be further configured to receive, from the eNB, a Random Access Response (RAR) according to a downlink repetition number that is based at least partly on the CE category for the UE. In some embodiments, the RAR may be received on physical downlink shared channel (PDSCH) frequency resources that may be based at least partly on the CE category for the UE and the PDSCH frequency resources may be disjoint from second PDSCH frequency resources for UEs not operating in the CE mode. The hardware processing circuitry may be further configured to receive, from the eNB, a physical downlink control channel (PDCCH) data block on PDCCH frequency resources for UEs operating in the CE mode. In some embodiments, the PDCCH data block may include a downlink control information (DCI) block that includes the downlink repetition number. The hardware processing circuitry may be further configured to refrain from decoding physical downlink control channel (PDCCH) data blocks as part of the reception of the RAR.

The hardware processing circuitry may be further configured to transmit, in response to the reception of the RAR, an uplink control message on physical uplink shared channel (PUSCH) resources according to an uplink control repetition number. In some embodiments, the RAR may include the uplink control repetition number. In some embodiments, the RAR may include an uplink grant for the UE and the uplink grant may include the uplink control repetition number. In some embodiments, the uplink control message may include a second CE category for the UE, the second CE category may be selected from a second group of candidate CE categories, and the second CE category may be determined at least partly from the reception of the RAR. The hardware processing circuitry may be further configured to receive, from the eNB, a contention resolution message according to the downlink repetition number. In some embodiments, the UE may further support Machine Type Communication (MTC). In some embodiments, the UE may operate according to a 3GPP protocol.

A non-transitory computer-readable storage medium that stores instructions for execution by one or more processors to perform operations for communication by a User Equipment (UE) in a coverage enhancement mode is disclosed herein. The operations may configure the one or more processors to determine, from a group of candidate CE categories, a CE category for the UE based at least partly on downlink channel statistics related to reception of one or more downlink signals at the UE from an Evolved Node-B (eNB) and transmit, in physical random access channel (PRACH) frequency resources, a PRACH preamble according to an uplink access repetition number. In some embodiments, the PRACH frequency resources and the uplink access repetition number may be based at least partly on the CE category for the UE. The operations may further configure the one or more processors to receive, from the eNB, a Random Access Response (RAR) according to a downlink repetition number that is based at least partly on the CE category for the UE. The operations may further configure the one or more processors to transmit, in response to the reception of the RAR, an uplink control message on physical uplink shared channel (PUSCH) resources according to an uplink control repetition number that is based at least partly on the CE category for the UE.

A method for communicating in a coverage enhancement mode performed by User Equipment (UE) is disclosed herein. The method may include determining, from a group of candidate CE categories, a CE category for the UE based at least partly on downlink channel statistics related to reception of one or more downlink signals at the UE from an Evolved Node-B (eNB). The method may further include transmitting, in physical random access channel (PRACH) frequency resources, a PRACH preamble according to an uplink access repetition number. In some embodiments, the PRACH frequency resources and the uplink access repetition number are based at least partly on the CE category for the UE. The method may further include receiving, from the eNB, a Random Access Response (RAR) according to a downlink repetition number that is based at least partly on the CE category for the UE. The method may further include transmitting, in response to the reception of the RAR, an uplink control message on physical uplink shared channel (PUSCH) resources according to an uplink control repetition number that is based at least partly on the CE category for the UE.

An Evolved Node-B (eNB) to operate in accordance with a coverage enhancement (CE) mode is disclosed herein. The eNB may include hardware processing circuitry configured to receive, from a User Equipment (UE) operating in the CE mode, a physical random access channel (PRACH) preamble on PRACH frequency resources allocated for UEs operating in the CE mode. The hardware processing circuitry may be further configured to determine, based at least partly on the PRACH frequency resources used for the reception of the PRACH preamble, a CE category for the UE from a group of candidate CE categories and transmit a Random Access Response (RAR) according to a downlink repetition number that is based at least partly on the CE category for the UE. In some embodiments, the group of candidate CE categories may include a first and a second candidate CE category for which PRACH frequency resources for the first and second CE categories are exclusive. In some embodiments, the RAR may be transmitted on physical downlink shared channel (PDSCH) frequency resources that are based at least partly on the CE category for the UE and the PDSCH frequency resources may be disjoint from second PDSCH frequency resources for UEs not operating in a CE mode.

The hardware processing circuitry may be further configured to transmit a physical downlink control channel (PDCCH) data block that includes PDSCH resource allocations for UEs not operating in the CE mode and to refrain from transmission of PDCCH data blocks for UEs operating in the CE mode. The hardware processing circuitry may be further configured to transmit a control message that includes an allocation for the PDSCH frequency resources, a modulation and coding scheme (MCS) indicator for the RAR transmission, and a timing relationship between PRACH transmission at the UE and the RAR transmission.

The hardware processing circuitry may be further configured to receive, from the UE, an uplink control message on physical uplink shared channel (PUSCH) resources according to an uplink control repetition number. In some embodiments, the uplink control repetition number may be based at least partly on the CE category for the UE. In some embodiments, the RAR may include the uplink control repetition number. The hardware processing circuitry may be further configured to transmit, in response to the reception of the uplink control message, a contention resolution message according to the downlink repetition number. The hardware processing circuitry may be further configured to receive, from a second UE not operating in the CE mode, a second PRACH preamble on second PRACH frequency resources allocated for UEs that are not operating in the CE mode. In some embodiments, the second PRACH frequency resources may be exclusive to the PRACH frequency resources allocated for UEs operating in the CE mode. In some embodiments, the eNB may operate according to a 3GPP protocol.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. A Machine Type Communication, MTC, User Equipment, UE, (102) to operate in accordance with a coverage enhancement, CE, mode, the UE (102), comprising hardware processing circuitry configured to:
determine a CE category for the (102) UE based at least partly on path loss between the UE (102) and an Evolved Node-B, eNB (104); and
transmit, in physical random access channel, PRACH, frequency resources, a PRACH preamble according to an uplink access repetition number, wherein a random access radio network temporary identifier, RA-RNTI, is computed for the PRACH preamble transmission as 1 + t_{id} + 10 • f_{id} + c • MTC_{id}, where t_{id} is the index of the first sub-frame of the PRACH preamble, f_{id} is the index of the PRACH within said sub-frame, c is a constant and MTC_{id} is 0 or 1 depending on whether the UE is in the CE mode;
wherein the uplink access repetition number is based at least partly on the CE category for the UE (102).

2. The UE (102) according to claim 1, the hardware processing circuitry further configured to receive, from the eNB (104), a Random Access Response, RAR, according to a downlink repetition number that is based at least partly on the CE category for the UE.

3. The UE (102) according to claim 2, the hardware processing circuitry further configured to transmit, in response to the reception of the RAR, an uplink control message on physical uplink shared channel, PUSCH, resources according to an uplink control repetition number.

4. The UE (102) according to claim 3, wherein the RAR includes the uplink control repetition number.

5. The UE (102) according to claim 10, wherein the RAR includes an uplink grant for the UE and the uplink grant includes the uplink control repetition number.

6. A non-transitory computer-readable storage medium that stores instructions for execution by one or more processors to perform operations for communication by Machine Type Communication, MTC, User Equipment, UE, in a coverage enhancement, CE, mode, the operations to configure the one or more processors to:
Determine a CE category for the UE (102) based at least partly on path loss between the UE (102) and an Evolved Node-B, eNB (104); and
transmit, in physical random access channel, PRACH, frequency resources, a PRACH preamble according to an uplink access repetition number, wherein a random access radio network temporary identifier, RA-RNTI, is computed for the PRACH preamble transmission as 1 + t_{id} + 10 • f_{id} + c • MTC_{id}, where t_{id} is the index of the first sub-frame of the PRACH preamble, f_{id} is the index of the PRACH within said sub-frame, c is a constant and MTC_{id} is 0 or 1 depending on whether the UE is in the CE mode;
wherein the uplink access repetition number is based at least partly on the CE category for the UE (102).

7. A method for communicating in a coverage enhancement, CE, mode performed by Machine Type Communication, MTC, User Equipment, UE, the method comprising:
Determining a CE category for the UE (102)based at least partly on path loss between the UE (102) and an Evolved Node-B, eNB (104); and
transmitting, in physical random access channel, PRACH, frequency resources, a PRACH preamble according to an uplink access repetition number, wherein a random access radio network temporary identifier, RA-RNTI, is computed for the PRACH preamble transmission as 1 + t_{id} + 10 • f_{id} + c • MTC_{id}, where t_{id} is the index of the first sub-frame, of the PRACH preamble, f_{id} is the index of the PRACH within said sub-frame c is a constant and MTC_{id} is 0 or 1 depending on whether the UE is in the CE mode;
wherein the uplink access repetition number is based at least partly on the CE category for the UE (102).

## Patentansprüche

1. Kommunikationsanwendergerät vom Maschinentyp, MTC-UE, (102), um in Übereinstimmung mit einer Abdeckungssteigerungsbetriebsart, CE-Betriebsart, zu arbeiten, wobei das UE (102) eine Hardware-Verarbeitungsschaltung umfasst, die konfiguriert ist:
eine CE-Kategorie für das UE (102) zumindest teilweise anhand eines Wegverlustes zwischen dem UE (102) und einem weiterentwickelten Knoten B, eNB, (104) zu bestimmen; und
in physikalischen Direktzugriffskanalfrequenzbetriebsmitteln, PRACH-Frequenzbetriebsmitteln, eine PRACH-Präambel gemäß einer Uplink-Zugriffswiederholungsnummer zu senden, wobei eine vorläufige Direktzugriffsverhältnisnetzkennung, RA-RNTI, für die PRACH-Präambelübertragung als 1 + t_{id} + 10 · f_{id} + c · MTC_{id} berechnet wird, wobei t_{id} der Index des ersten Unterrahmens der PRACH-Präambel ist, f_{id} der Index des PRACH innerhalb des Unterrahmens ist, c eine Konstante ist und MTC_{id} abhängig davon, ob das UE in der CE-Betriebsart ist, 0 oder 1 ist;
wobei die Uplink-Zugriffswiederholungsnummer zumindest teilweise auf der CE-Kategorie für das UE (102) beruht.

2. UE (102) nach Anspruch 1, wobei die Hardware-Verarbeitungsschaltung ferner konfiguriert ist, von dem eNB (104) eine Direktzugriffsantwort, RAR, gemäß einer Downlink-Wiederholungsnummer, die zumindest teilweise auf der CE-Kategorie für das UE beruht, zu empfangen.

3. UE (102) nach Anspruch 2, wobei die Hardware-Verarbeitungsschaltung ferner konfiguriert ist, als Reaktion auf den Empfang der RAR eine Uplink-Steuernachricht auf physikalischen geteilten Uplink-Kanalbetriebsmitteln, PUSCH-Betriebsmitteln, gemäß einer Uplink-Steuerwiederholungsnummer zu senden.

4. UE (102) nach Anspruch 3, wobei die RAR die Uplink-Steuerwiederholungsnummer enthält.

5. UE (102) nach Anspruch 10, wobei die RAR eine Uplink-Bewilligung für das UE enthält und die Uplink-Bewilligung die Uplink-Steuerwiederholungsnummer enthält.

6. Nichttransitorisches computerlesbares Speichermedium, das Anweisungen für die Ausführung durch einen oder mehrere Prozessoren speichert, um Vorgänge für eine Kommunikation durch ein Kommunikationsanwendergerät vom Maschinentyp, MTC-UE, in einer Abdeckungssteigerungsbetriebsart, CE-Betriebsart, auszuführen, wobei die Vorgänge dazu dienen, den einen oder die mehreren Prozessoren zu konfigurieren:
eine CE-Kategorie für das UE (102) zumindest teilweise anhand des Wegverlustes zwischen dem UE (102) und einem weiterentwickelten Knoten B, eNB, (104) zu bestimmen; und
in physikalischen Direktzugriffskanalfrequenzbetriebsmitteln, PRACH-Frequenzbetriebsmitteln, eine PRACH-Präambel gemäß einer Uplink-Zugriffswiederholungsnummer zu senden, wobei eine vorläufige Direktzugriffsverhältnisnetzkennung, RA-RNTI, für die PRACH-Präambelübertragung als 1 + t_{id} + 10 · f_{id} + c · MTC_{id} berechnet wird, wobei t_{id} der Index des ersten Unterrahmens der RACH-Präambel ist, f_{id} der Index des PRACH innerhalb des Unterrahmens ist, c eine Konstante ist und MTC_{id} abhängig davon, ob das UE in der CE-Betriebsart ist, 0 oder 1 ist;
wobei die Uplink-Zugriffswiederholungsnummer zumindest teilweise auf der CE-Kategorie des UE (102) beruht.

7. Verfahren zum Kommunizieren in einer Abdeckungssteigerungsbetriebsart, CE-Betriebsart, die durch ein Kommunikationsanwendergerät vom Maschinentyp, MTC-UE, ausgeführt wird, wobei das Verfahren Folgendes umfasst:
Bestimmen einer CE-Kategorie für das UE (102) zumindest teilweise anhand eines Wegverlustes zwischen dem UE (102) und einem weiterentwickelten Knoten B, eNB, (104); und
Senden in physikalischen Direktzugriffskanalfrequenzbetriebsmitteln, PRACH-Frequenzbetriebsmitteln, einer PRACH-Präambel gemäß einer Uplink-Zugriffswiederholungsnummer, wobei eine vorläufige Direktzugriffsverhältnisnetzkennung, RA-RNTI, für die PRACH-Präambelübertragung als 1 + t_{id} + 10 . f_{id} + c · MTC_{id} berechnet wird, wobei t_{id} der Index des ersten Unterrahmens der RACH-Präambel ist, f_{id} der Index des PRACH innerhalb des Unterrahmens ist, c eine Konstante ist und MTC_{id} abhängig davon, ob das UE in der CE-Betriebsart ist, 0 oder 1 ist;
wobei die Uplink-Zugriffswiederholungsnummer zumindest teilweise auf der CE-Kategorie für das UE (102) beruht.

## Revendications

1. Équipement d'utilisateur, UE, (102) pour communication de type machine, MTC, destiné à fonctionner selon un mode de renforcement de couverture, CE, l'UE (102) comportant une circuiterie matérielle de traitement configurée pour :
déterminer une catégorie de CE pour l'UE (102) en se basant au moins partiellement sur l'affaiblissement de transmission entre l'UE (102) et un noeud B évolué, eNB (104) ; et
émettre, dans des ressources de fréquence de canal physique d'accès aléatoire, PRACH, un préambule de PRACH selon un nombre de répétitions d'accès de liaison montante, un identifiant temporaire de réseau de rapport d'accès aléatoire, RA-RNTI, étant calculé pour l'émission du préambule de PRACH comme 1 + t_{id} + 10· f_{id} + c·MTC_{id}, t_{id} étant l'indice de la première sous-trame du préambule de PRACH, f_{id} étant l'indice du PRACH au sein de ladite sous-trame, c étant une constante et MTC_{id} valant 0 ou 1 suivant que l'UE se trouve ou non dans le mode de CE ;
le nombre de répétitions d'accès de liaison montante étant basé au moins partiellement sur la catégorie de CE pour l'UE (102).

2. UE (102) selon la revendication 1, la circuiterie matérielle de traitement étant en outre configurée pour recevoir, en provenance de l'eNB (104), une réponse d'accès aléatoire, RAR, selon un nombre de répétitions de liaison descendante qui est basé au moins partiellement sur la catégorie de CE pour l'UE.

3. UE (102) selon la revendication 2, la circuiterie matérielle de traitement étant en outre configurée pour émettre, en réaction à la réception de la RAR, un message de commande de liaison montante sur des ressources de canal physique partagé de liaison montante, PUSCH, selon un nombre de répétitions de commande de liaison montante.

4. UE (102) selon la revendication 3, la RAR comprenant le nombre de répétitions de commande de liaison montante.

5. UE (102) selon la revendication 10, la RAR comprenant une attribution de liaison montante pour l'UE et l'attribution de liaison montante comprenant le nombre de répétitions de commande de liaison montante.

6. Support de stockage non transitoire lisible par ordinateur qui conserve des instructions destinées à être exécutées par un ou plusieurs processeurs pour effectuer des opérations en vue d'une communication par un équipement d'utilisateur, UE, pour communication de type machine, MTC, dans un mode de renforcement de couverture, CE, les opérations visant à configurer le ou les processeurs pour :
déterminer une catégorie de CE pour l'UE (102) en se basant au moins partiellement sur l'affaiblissement de transmission entre l'UE (102) et un noeud B évolué, eNB (104) ; et
émettre, dans des ressources de fréquence de canal physique d'accès aléatoire, PRACH, un préambule de PRACH selon un nombre de répétitions d'accès de liaison montante, un identifiant temporaire de réseau de rapport d'accès aléatoire, RA-RNTI, étant calculé pour l'émission du préambule de PRACH comme 1 + t_{id} + 10 f_{id} + c - MTC_{id}, t_{id} étant l'indice de la première sous-trame du préambule de RACH, f_{id} étant l'indice du PRACH au sein de ladite sous-trame, c étant une constante et MTC_{id} valant 0 ou 1 suivant que l'UE se trouve ou non dans le mode de CE ;
le nombre de répétitions d'accès de liaison montante étant basé au moins partiellement sur la catégorie de CE pour l'UE (102).

7. Procédé de communication dans un mode de renforcement de couverture, CE réalisé par un équipement d'utilisateur, UE, pour communication de type machine, MTC, le procédé comportant les étapes consistant à :
déterminer une catégorie de CE pour l'UE (102) en se basant au moins partiellement sur l'affaiblissement de transmission entre l'UE (102) et un noeud B évolué, eNB (104) ; et
émettre, dans des ressources de fréquence de canal physique d'accès aléatoire, PRACH, un préambule de PRACH selon un nombre de répétitions d'accès de liaison montante, un identifiant temporaire de réseau de rapport d'accès aléatoire, RA-RNTI, étant calculé pour l'émission du préambule de PRACH comme 1 + t_{id} + 10 f_{id} + c - MTC_{id}, t_{id} étant l'indice de la première sous-trame du préambule de RACH, f_{id} étant l'indice du PRACH au sein de ladite sous-trame, c étant une constante et MTC_{id} valant 0 ou 1 suivant que l'UE se trouve ou non dans le mode de CE ;
le nombre de répétitions d'accès de liaison montante étant basé au moins partiellement sur la catégorie de CE pour l'UE (102).
